# EUROPÄISCHE PATENTANMELDUNG

(11) **EP 3 456 559 A1**
(43) Veröffentlichungstag der Anmeldung: **20.03.2019**
(21) Anmeldenummer: 18194341.6
(22) Anmeldetag: 13.09.2018
(51) Int. Cl.: B60G 11/113, B60G 7/00, B60G 11/04

(54) **BLATTFEDER ZUR VERWENDUNG IN VERBINDUNG MIT EINER RADAUFHÄNGUNG EINES FAHRZEUGES**

(30) Priorität: 14.09.2017 AT 3682017
(71) Anmelder: Hendrickson Commercial Vehicle Systems Europe GmbH, 8750 Judenburg (AT)
(72) Erfinder: ZAMBERGER, Jörg, 8753 Fohnsdorf (AT); LEONARDS, Rainer, 52428 Juelich (DE)
(74) Vertreter: Beer & Partner Patentanwälte KG

(57) **Zusammenfassung**

Eine Blattfeder (1), insbesondere Parabelfeder oder Lenkerfeder, zur Verwendung in Verbindung mit einer Radaufhängung eines Fahrzeuges hat ein Federblatt (2), das eine Oberseite (3), eine Unterseite (4), zwei Endabschnitte (5) und einen sich zwischen den Endabschnitten (5) erstreckenden Mittelabschnitt (6) aufweist, wobei im Mittelabschnitt (6) ein Klemmbereich (7) vorgesehen ist, in dem die Blattfeder (1) im Einbauzustand im Fahrzeug über wenigstens eine Achsverbindungseinrichtung (10) der Radaufhängung, insbesondere über wenigstens einen die Blattfeder (1) teilweise umgreifenden Formteil, vorzugsweise über wenigstens einen U-Bolzen, mit einer Achse (9) oder einem Achsenbolzen des Fahrzeuges verbunden ist. Das Federblatt (2) weist eine der Anzahl an Achsverbindungseinrichtungen (10) entsprechende Anzahl an Achsverbindungsbauteilen (8) auf.

## Beschreibung

Die Erfindung betrifft eine Blattfeder, insbesondere Parabelfeder oder Lenkerfeder, zur Verwendung in Verbindung mit einer Radaufhängung eines Fahrzeuges, mit einem Federblatt, das eine Oberseite, eine Unterseite, zwei Endabschnitte und einen sich zwischen den Endabschnitten erstreckenden Mittelabschnitt aufweist, wobei im Mittelabschnitt ein Klemmbereich vorgesehen ist, in welchem die Blattfeder im Einbauzustand im Fahrzeug über wenigstens eine Achsverbindungseinrichtung der Radaufhängung, insbesondere über wenigstens einen die Blattfeder teilweise umgreifenden Formteil, vorzugsweise über wenigstens einen U-Bolzen, mit einer Achse oder einem Achsenbolzen des Fahrzeuges verbunden ist.

Zudem betrifft die Erfindung eine Radaufhängung zur Verwendung in Verbindung mit einem Fahrzeug, mit wenigstens einer solchen Blattfeder und wenigstens einer Achsverbindungseinrichtung.

Weiters betrifft die Erfindung ein Fahrzeug mit wenigstens einer solchen Radaufhängung und wenigstens einer Achse und/oder wenigstens einem Achsenbolzen.

Blattfedern finden Anwendung bei Radaufhängungen in Fahrzeugen, insbesondere in Nutzfahrzeugen oder Anhängern (gezogenes Fahrzeug). Die Anforderungen an Kraftfahrzeuge sind
zum einen dadurch geprägt, dass einzelne Bauteile immer höheren mechanischen Beanspruchungen unterliegen, beispielsweise auf Grund steigender Motorleistungen. Zum anderen sind die Anforderungen durch die Reduzierung des Gewichtes einzelner Bauteile geprägt.

Bei der Erzeugung von Blattfedern sowie bei der Einbindung von Blattfedern in einer Radaufhängung eines Fahrzeuges spielt das Gewicht eine entscheidende wirtschaftliche Rolle. Ein Vorteil der Verwendung möglichst leichter Blattfedern bzw. Radaufhängungen im Fahrzeugbau ist die Gewichtsreduktion des gesamten Kraftfahrzeuges, was dazu führt, dass mehr Transportgut unter Einhaltung des zulässigen Maximalgewichtes geladen werden kann. Oft sind LKWs jedoch nicht mit dem maximal möglichen Transportgewicht beladen bzw. die LKWs fahren zum Teil auch unbeladen, wobei der Vorteil einer möglichst leichten Blattfeder bzw. Radaufhängung darin liegt, dass der Kraftstoffverbrauch gesenkt werden kann. Wenn die ungefederten Massen bei einem Fahrzeug reduziert werden, besteht ein Vorteil zudem darin, dass die Fahrsicherheit erhöht wird. Der größte Vorteil jedoch liegt in der Reduktion des Materialeinsatzes während des Herstellungsprozesses und der damit einhergehenden Kostenreduktion des fertigen Produktes.

Radaufhängungen für Fahrzeuge weisen bekanntermaßen eine Blattfeder sowie Achsverbindungseinrichtungen zum Verbinden der Blattfeder mit einer Achse oder einem Achsenbolzen auf. Blattfedern weisen hierzu einen Klemmbereich auf, wobei die im Fahrzeug eingebaute Blattfeder im Klemmbereich über Achsverbindungseinrichtungen, in der Regel über zwei U-Bolzen, mit der Achse oder dem Achsenbolzen verbunden ist. Die U-Bolzen weisen zwei Schenkel, die im Einsatzzustand im Fahrzeug seitlich neben der Blattfeder verlaufen, und einen Umlenkbereich, der im Einsatzzustand im Fahrzeug die beiden Schenkel oberhalb der Blattfeder miteinander verbindet, auf. An dem dem Umlenkbereich gegenüberliegenden Ende sind die Schenkel an der Achse oder dem Achsbolzen befestigt. Zwischen der Oberseite der Blattfeder (Einblattfeder) bzw. der Oberseite des obersten Federblattes der Blattfeder (Mehrblattfeder) und dem Umlenkbereich des U-Bolzens ist ein Achsverbindungsbauteil angeordnet, welcher zur Führung bzw. Positionierung der U-Bügel im Umlenkbereich dient.

Bekannt sind längliche, einteilige Achsverbindungsbauteile, die im Klemmbereich auf der Oberseite der Blattfeder bzw. der Oberseite des obersten Federblattes der Blattfeder aufliegen und durch die Klemmkraft der U-Bolzen in Position gehalten werden, wobei zur besseren Kraftüberleitung vom Achsverbindungsbauteil zur Blattfeder zwischen der Blattfeder und dem

Achsverbindungsbauteil ein Zwischenblech angeordnet ist. An den beiden Längsenden des Achsverbindungsbauteils ist jeweils ein Führungsabschnitt für den entsprechenden U-Bolzen vorgesehen, in welchem die Kontur des Achsverbindungsbauteils an den Umlenkbereich des U-Bolzens angepasst ist. Die beiden Führungsabschnitte sind mit einem Steg miteinander verbunden.

Dieser aus dem Stand der Technik bekannte Achsverbindungsbauteil ist schwer. Da der Steg mit beiden Führungsabschnitten verbunden ist und somit ungünstigen und materialschwächenden Kräften, beispielsweise Biege- und Torsionskräften, ausgesetzt ist, kann der Steg im Fahrbetrieb bei dynamischer Belastung brechen, was zu einer Einschränkung des Fahrbetriebes führen kann. Insbesondere wenn der Achsverbindungsbauteil im Hinblick auf Gewichtseinsparung unterdimensioniert ist, kann der Steg im Fahrbetrieb bei dynamischer Belastung leicht brechen. Zudem kann der Achsverbindungsbauteil bei der Montage leicht verrutschen.

Der Erfindung liegt die Aufgabe zu Grunde, eine Blattfeder sowie eine Radaufhängung zur Verfügung zu stellen, mit welchen Gewicht gespart und die Bruchgefahr vermieden werden kann. Zudem soll die Möglichkeit geschaffen werden, dass die Montage erleichtert werden kann.

Gelöst wird diese Aufgabe erfindungsgemäß mit einer Blattfeder, welche die Merkmale des Anspruches 1 aufweist. Zudem wird diese Aufgabe mit einer Radaufhängung gelöst, welche die Merkmale des Anspruches 11 aufweist, sowie mit einem Fahrzeug, welches die Merkmale des Anspruches 14 aufweist.

Bevorzugte und vorteilhafte Ausführungsformen der Erfindung sind Gegenstand der Unteransprüche.

Erfindungsgemäß ist vorgesehen, dass das Federblatt pro Achsverbindungseinrichtung einen korrespondierenden Achsverbindungsbauteil aufweist. Das Federblatt weist eine der Anzahl an Achsverbindungseinrichtungen entsprechende Anzahl an Achsverbindungsbauteilen, die jeweils mit der entsprechenden Achsverbindungseinrichtung korrespondieren, auf.

Im Vergleich mit dem eingangs genannten Stand der Technik ergeben sich die Vorteile wie folgt:
Wenn die Radaufhängung wie üblich zwei U-Bolzen als Achsverbindungseinrichtungen aufweist, weist das Federblatt nicht mehr einen sich über den Klemmbereich erstreckenden Achsverbindungsbauteil auf, sondern zwei getrennte Achsverbindungsbauteile. Die beiden Achsverbindungsbauteile können jeweils nur im Umlenkbereich der U-Bolzen vorgesehen und müssen nicht mehr mit einem Steg miteinander verbunden sein. Durch den Wegfall des Stegs wird Gewicht reduziert, wobei gleichzeitig die mit dem Steg einhergehende Bruchgefahr vermieden wird, da zwischen den Achsverbindungsbauteilen keine materialschwächenden Kräfte mehr auftreten.

Im Rahmen der Erfindung ist es vorzugsweise vorgesehen, dass der Achsverbindungsbauteil an der Oberseite des Federblatts angeordnet ist, um dort einen Führungsabschnitt für die Achsverbindungseinrichtung, insbesondere für den Umlenkbereich eines U-Bolzens, zu bilden.

Unter "Oberseite des Federblatts" wird die in Einsatzposition im Fahrzeug obere Seite verstanden, die in Einsatzzustand auf Zug beansprucht wird. Unter "Unterseite des Federblatts" wird die in Einsatzposition im Fahrzeug untere Seite verstanden, die in Einsatzzustand auf Druck beansprucht wird.

In einer besonders bevorzugten Ausführungsform der Erfindung ist vorgesehen, dass der Achsverbindungsbauteil und das Federblatt wenigstens bereichsweise formschlüssig ineinandergreifen. Hierzu kann vorgesehen sein, dass der Achsverbindungsbauteil wenigstens einen der Oberseite des Federblatts zugeordneten Vorsprung aufweist, dass das Federblatt an seiner Oberseite eine der Anzahl an Vorsprüngen entsprechende Anzahl an Vertiefungen aufweist, deren Form an die Form des entsprechenden Vorsprunges angepasst ist, und dass der Achsverbindungsbauteil in der entsprechenden Vertiefung formschlüssig angeordnet ist. Es kann auch vorgesehen sein, dass die Oberseite des Federblatts einen Vorsprung aufweist, der in eine Vertiefung im Achsverbindungsbauteil formschlüssig eingreift.

Durch die formschlüssige Anordnung des Achsverbindungsbauteils am Federblatt kann eine Positionierung des Achsverbindungsbauteils direkt auf der Oberseite des Federblatts erzielt werden. Dies hat zum einen den Vorteil, dass der Achsverbindungsbauteil gegen Verrutschen gesichert ist, so dass die Montage einfacher wird. Zum anderen hat dies den Vorteil, dass das gemäß dem Stand der Technik verwendete Zwischenblech zwischen dem Achsverbindungsbauteil und dem Federblatt entfallen kann, wodurch wiederum Gewicht reduziert werden kann. Auch bei Verwendung von Zwischenblechen kann im Vergleich zum Stand der Technik Gewicht reduziert werden, da die Zwischenbleche nur noch für den Bereich des jeweiligen Achsverbindungsbauteils dimensioniert sein müssen und kein Steg, der die Achsverbindungsteile miteinander verbindet, vorgesehen sein muss. Zudem weisen die Zwischenbleche in jenem Bereich, in dem die Achsverbindungsbauteile formschlüssig mit dem Federblatt verbunden sind, eine entsprechende Materialaussparung auf.

Die Vertiefungen und Vorsprünge dienen zur formgebundenen Positionierung der Achsverbindungsbauteil am Federblatt und können je nach Anwendungsfall, insbesondere je nachdem, wie die Kraftübertragung auf die Blattfeder realisiert werden soll, unterschiedliche Formen und Abmessungen haben. Durch die formgebundene bzw. formschlüssige Anordnung des Achsverbindungsbauteils am Federblatt wird sichergestellt, dass der Achsverbindungsbauteil nach dem Positionieren auf der Oberseite des Federblatts seine Position behält. Vor allem soll der Achsverbindungsbauteil bei der Achsverbindungsmontage der Blattfeder mit der Achse seine Positionen beibehalten und somit eine sichere Verbindung zur Achse gewährleisten.

Im Vergleich zu dem im Stand der Technik verwendeten, einteiligen Achsverbindungsbauteil, welcher auf einem auf der Oberseite des Federblatts aufliegenden Zwischenblech aufliegt und bei der Achsverbindungsmontage verrutschen kann, ist dieser Effekt aus praktischer Sicht besonders vorteilhaft.

Im Rahmen der Erfindung ist es bevorzugt, wenn das Federblatt zwei oder mehr als zwei Achsverbindungsbauteile aufweist. Insbesondere ist es bevorzugt, wenn das Federblatt zwei Achsverbindungsbauteile aufweist, so dass es bei gängigen Radaufhängungen mit zwei U-Bolzen als Achsverbindungseinrichtungen verwendet werden kann.

Weist eine Blattfeder mehrere Federblätter auf, so sind die Federblätter vorzugsweise wenigstens im Klemmbereich, insbesondere über einen durch ein zentrales Durchgangsloch im Klemmbereich eines jeden Federblattes geführten Bolzen, miteinander verbunden, wobei die Federblätter entweder direkt aneinander anliegen oder zwischen den Federblättern Zwischenelemente, wie z.B. Zwischenbleche, angeordnet bzw. eingeklemmt sind. In einer Ausführungsform ist daher vorgesehen, dass das Federblatt im Klemmbereich ein zentrales Durchgangsloch aufweist, und dass das Durchgangsloch zwischen Achsverbindungsbauteilen, insbesondere zwischen den beiden Achsverbindungsbauteilen, vorgesehen ist.

In einer vorteilhaften Ausführungsform ist vorgesehen, dass der Achsverbindungsbauteil in der entsprechenden Vertiefung und/oder an der Oberseite des Federblatts mit dem Federblatt verklebt ist. Somit kann der Achsverbindungsbauteil zum Liefern an einen Kunden einfach in die Blattfeder integriert werden. Das Verkleben dient dabei als Transportsicherung.

Die Erfindung bezieht sich auf eine formgebundene Anbindung von Achsverbindungsbauteilen mit einer Blattfeder unabhängig von deren Blattanzahl. So kann die erfindungsgemäße Blattfeder nur ein Federblatt aufweisen oder zwei oder mehr als zwei Federblätter, wobei nur das oberste, d.h. das im Einbauzustand im Fahrzeug oben angeordnete Federblatt, pro Achsverbindungseinrichtung einen korrespondierenden Achsverbindungsbauteil aufweist.

Im Rahmen der Erfindung ist vorgesehen, dass das Federblatt wenigstens einen Achsverbindungsbauteil, insbesondere zwei oder mehr, vorzugsweise zwei Achsverbindungsbauteile aufweist, wobei jeder Achsverbindungsbauteil einen einzigen Führungsabschnitt für eine einzige Achsverbindungseinrichtung aufweist. Der Führungsabschnitt weist vorzugsweise eine Kontur auf, die an die Kontur der entsprechenden Achsverbindungseinrichtung angepasst ist. Wenn als Achsverbindungseinrichtung ein U-Bolzen mit zwei Schenkeln und einem Umlenkbereich verwendet wird, ist vorzugsweise vorgesehen, dass die Form des Führungsabschnitts an den Umlenkbereich des U-Bolzens angepasst ist.

Im Gegensatz zum Stand der Technik, in welchem der Achsverbindungsbauteil nicht Bestandteil der Blattfeder ist, kann erfindungsgemäß erzielt werden, dass der Achsverbindungsbauteil Bestandteil der Blattfeder ist.

Weitere Einzelheiten, Merkmale und Vorteile der Erfindung ergeben sich aus der nachstehenden Beschreibung bevorzugter und den Schutzbereich nicht einschränkender Ausführungsformen der Erfindung unter Bezugnahme auf die angeschlossenen Zeichnungen. Es zeigt:
- Fig. 1: Teile einer Radaufhängung mit einem einteiligen Achsverbindungsbauteil gemäß dem Stand der Technik,
- Fig. 2: einen einteiligen Achsverbindungsbauteil gemäß dem Stand der Technik,
- Fig. 3: einen Ausschnitt einer erfindungsgemäßen Parabelfeder im Klemmbereich mit zwei Achsverbindungsbauteilen in einer Explosionsansicht,
- Fig. 4: eine erfindungsgemäße Parabelfeder mit zwei daran angeordneten Achsverbindungsbauteilen,
- Fig. 5: einen Ausschnitt einer erfindungsgemäßen Lenkerfeder mit zwei daran angeordneten Achsverbindungsbauteilen in einer Explosionsansicht,
- Fig. 6: eine erfindungsgemäße Lenkerfeder mit zwei daran angeordneten Achsverbindungsbauteilen und
- Fig. 7: einen Ausschnitt einer weiteren Ausführungsform einer erfindungsgemäßen Blattfeder.

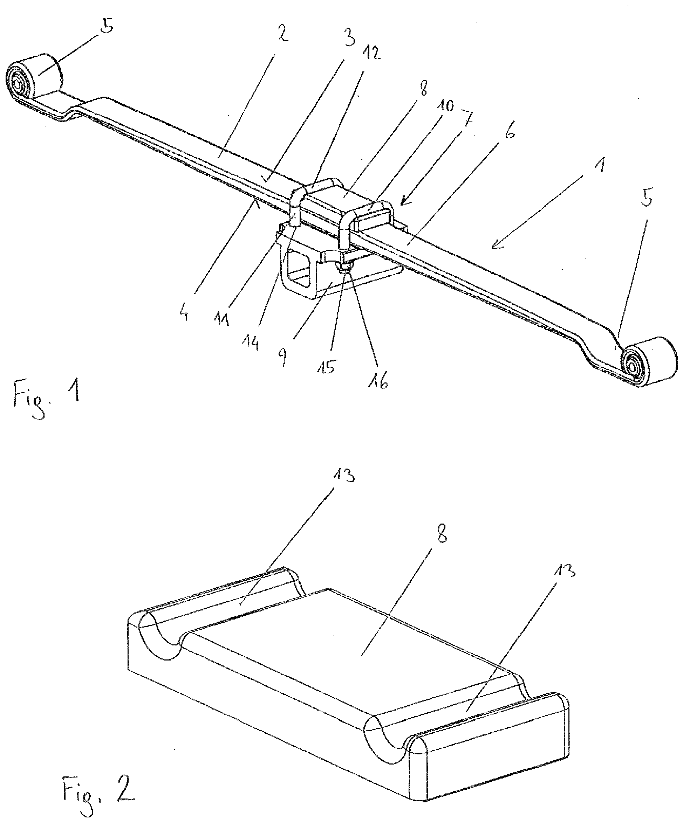

Fig. 1 zeigt eine Blattfeder 1 gemäß dem Stand der Technik, mit einem einzelnen Federblatt 2, welches eine Oberseite 3, eine Unterseite 4, zwei Endabschnitte 5 und einen sich zwischen den Endabschnitten 5 erstreckenden Mittelabschnitt 6 aufweist. In einer vorgesehenen, im Folgenden beschriebenen Einbauposition der Blattfeder 1 ist die Oberseite 3 nach oben und die Unterseite 4 nach unten gerichtet.

In einem Klemmbereich 7 des Mittelabschnittes 6 ist an der Oberseite 3 des Federblattes 2 ein Achsverbindungsbauteil 8 angeordnet. Ein solcher, aus dem Stand der Technik bekannter, einteiliger Achsverbindungsbauteil 8 ist in Fig. 2 im Detail dargestellt.

Im Klemmbereich 7 ist die Blattfeder 1 mit einer Achse 9 verbunden. Dafür sind zwei Achsverbindungseinrichtungen 10 in Form von U-Bolzen mit jeweils zwei Schenkel 11 und einem dazwischen angeordneten Umlenkbereich 12 vorgesehen. Die Achsverbindungseinrichtungen 10 umgreifen das Federblatt 2 und den Achsverbindungsbauteil 8 und sind mit den Umlenkbereichen 12 in nach oben weisenden Führungsabschnitten 13 des Achsverbindungsbauteiles 8 aufgenommen. Die Führungsabschnitte 13, die an die jeweilige Kontur des Umlenkbereiches 12 angepasst sind, sind in der dargestellten Ausführungsform an die Kontur der U-Bolzen angepasst und rillenförmig ausgestaltet.

Die Schenkel 11 der Achsverbindungseinrichtungen 10 sind von oben her durch Durchgangslöcher 14 der Achse 9 geführt, wobei jeder Schenkel 11 mit einem Schenkelende 15, welches mit einem Außengewinde versehen ist, nach unten aus dem Durchgangsloch 14 hinausragt. Auf die Schenkelenden 15 sind Muttern 16 derart aufgeschraubt, dass die Achsverbindungseinrichtungen 10 den Achsverbindungsbauteil 8 und das Federblatt 2 an die Achse 9 anpressen und dadurch die Achse 9 und die Blattfeder 1 kraftschlüssig miteinander verbunden sind.

Zur besseren Krafteinleitung bzw. Kraftübertragung kann zwischen dem Achsverbindungsbauteil 8 und dem Federblatt 2 ein in Fig. 1 nicht sichtbares Zwischenblech 17 angeordnet sein.

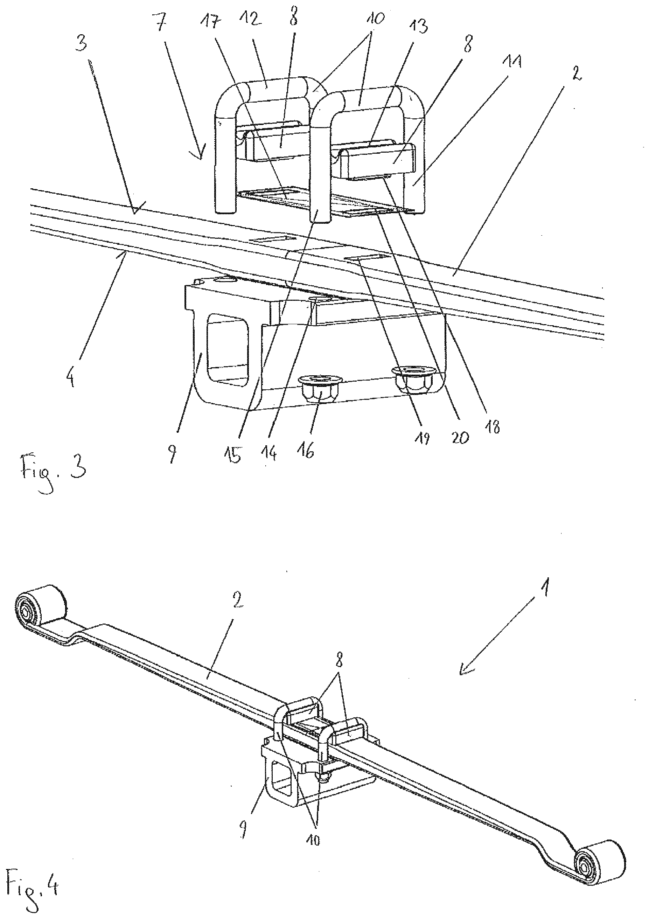

Fig. 3 zeigt ein Detail einer Ausführungsform einer erfindungsgemäßen Blattfeder 1 in einer Explosionsansicht. Die Explosionsansicht dient dabei lediglich der besseren Veranschaulichung und die folgende Figurenbeschreibung bezieht sich auf die in Fig. 4 dargestellte zusammengebaute und mit der Achse 9 verbundene, erfindungsgemäße Blattfeder 1.

Fig. 3 und 4 zeigen eine Ausführungsform einer erfindungsgemäßen Blattfeder 1 in Form einer einblättrigen Parabelfeder mit nur einem einzelnen Federblatt 2. Bei dieser Blattfeder 1 ist jeder Achsverbindungseinrichtung 10 ein separater Achsverbindungsbauteil 8 zugeordnet, wobei jeder Achsverbindungsbauteil 8 einen nach oben gerichteten Führungsabschnitt 13 für die Aufnahme des Umlenkbereiches 12 der zugeordneten Achsverbindungseinrichtung 10 aufweist.

An einer unteren, der Oberseite 3 des Federblattes 2 zugewandten Seite weist der Achsverbindungsbauteil 8 einen zapfen- oder rippenförmigen Vorsprung 18 auf, der in einer entsprechenden Vertiefung 19 auf der Oberseite 3 des Federblattes 2 aufgenommen, insbesondere in die Vertiefung 19 hineingesteckt, ist. Die Anzahl der vorgesehenen Vertiefungen 19 korreliert mit der Anzahl der Achsverbindungsbauteile 8. Der Vorsprung 18 des Achsverbindungsbauteiles 8 und die entsprechende Vertiefung 19 des Federblattes 2 bilden eine formschlüssige Verbindung. Dadurch kann ein unerwünschtes Verschieben des Achsverbindungsbauteiles 8 und somit der Achsverbindungseinrichtung 10 entlang der Oberseite 3 des Federblattes 2 verhindert werden.

Wie beim Stand der Technik sind die Schenkel 11 der Achsverbindungseinrichtungen 10 durch die Durchgangslöcher 14 der Achse 9 geführt und an die Schenkelenden 15 sind die Muttern 16 aufgeschraubt, sodass die Achsverbindungseinrichtungen 10 die Achsverbindungsbauteile 8 und das Federblatt 2 an die Achse 9 anpressen und die Achse 9 und die Blattfeder 1 kraftschlüssig miteinander verbunden sind.

Zwischen den Achsverbindungsbauteilen 8 und dem Federblatt 2 ist zur besseren Krafteinleitung bzw. Kraftübertragung ein Zwischenblech 17, wie in Fig.4 dargestellt, angeordnet, wobei das Zwischenblech 17, wie in Fig. 3 erkennbar ist, zu den Vorsprüngen 18 der Achsverbindungsbauteile 8 korrespondierende Löcher 20 aufweist.

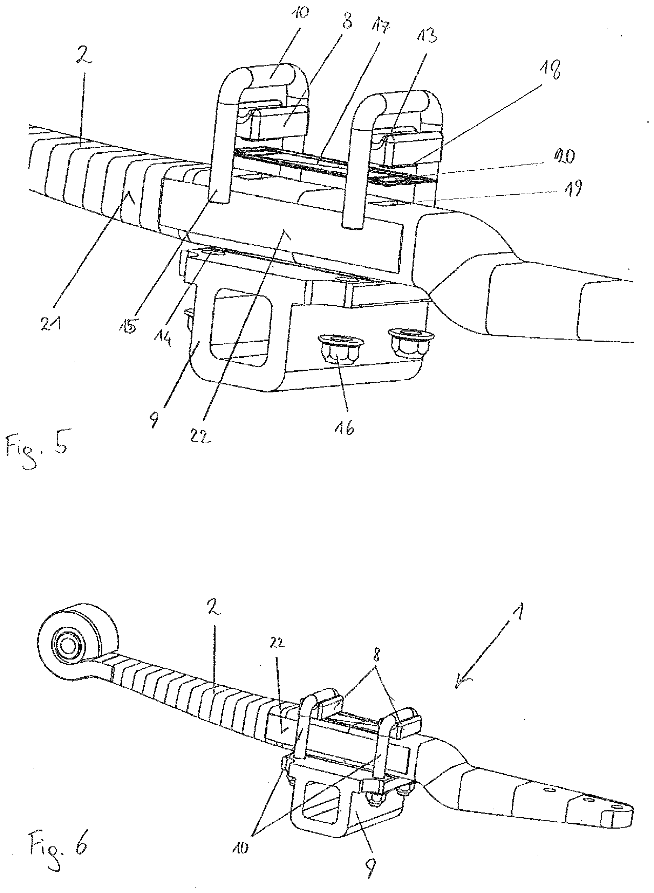

Fig. 5 zeigt wie Fig. 3 ein Detail einer Ausführungsform einer erfindungsgemäßen Blattfeder 1 in einer Explosionsansicht. Auch in diesem Fall dient die Explosionsansicht lediglich der besseren Veranschaulichung und die folgende Figurenbeschreibung bezieht sich auf eine in Fig. 6 dargestellte Ausführungsform einer zusammengebauten und mit der Achse 9 verbundenen, erfindungsgemäßen Blattfeder 1.

In den Fig. 5 und 6 ist eine Ausführungsform einer erfindungsgemäßen Blattfeder 1 als einblättrige Lenkerfeder mit zwei unterschiedlich geformten Endabschnitten 5 dargestellt. Die Form und Anordnung der Achsverbindungsbauteile 8 im Klemmbereich 7 entspricht im Wesentlichen der in Fig. 4 gezeigten Ausführungsform.

Wie in Fig. 6 dargestellt, kann das Federblatt 2 der Blattfeder 1 im Klemmbereich 7 so bearbeitet bzw. geformt sein, dass an jeder Seitenfläche 21 eine plane Anlagefläche 22 gebildet ist, wobei die Anlageflächen 22 zueinander parallel sind. Eine Breite des Federblattes 2 kann somit an die Form der Achsverbindungseinrichtungen 10 angepasst werden.

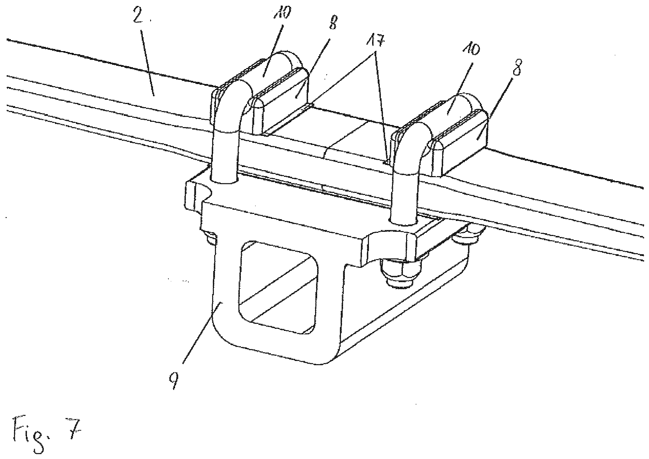

Fig. 7 zeigt eine weitere Ausführungsform einer erfindungsgemäßen Blattfeder 1, bei der mehrere Zwischenbleche 17 vorgesehen sind, wobei jedem Achsverbindungsbauteil 8 ein separates Zwischenblech 17 mit einem in Form und Größe dem Vorsprung 18 des Achsverbindungsbauteiles 8 angepasstem Loch 20 zugeordnet ist.

Anders als in den Fig. 3 bis 7 dargestellt, können im Rahmen der Erfindung auch mehr als zwei Achsverbindungseinrichtungen 10 und demnach auch mehr als zwei Achsverbindungsbauteile 8 zum Verbinden der Blattfeder 1 mit der Achse 9 vorgesehen sein.

Weiters können im Rahmen der Erfindung Achsverbindungseinrichtungen 10 mit einer anderen Form als der eines U-Bolzens vorgesehen sein, die beispielsweise keinen runden, sondern einen rechteckigen Querschnitt aufweisen. Ebenso kann die Achse 9 anders als in den Figuren dargestellt, beispielsweise rund, ausgeformt sein.

Die erfindungsgemäße Blattfeder 1 kann als Mehrblattfeder ausgeführt sein und demnach mehr als ein Federblatt 2 aufweisen, wobei der Achsverbindungsbauteil 8 auf dem in Einbauposition obersten Federblatt 2 aufliegt. Bei einer solchen Mehrblattfeder können die Federblätter 2 jeweils ein zentrales, weiteres Durchgangsloch im Klemmbereich 7 aufweisen, durch das ein Stift oder Bolzen, insbesondere eine Schraube, derart geführt bzw. gesteckt ist, dass die Federblätter 2 aneinander angepresst werden und miteinander im Klemmbereich 7 verbunden sind.

Zusammenfassend kann ein Ausführungsbeispiel der Erfindung wie folgt beschrieben werden:
Eine Blattfeder 1, insbesondere Parabelfeder oder Lenkerfeder, zur Verwendung in Verbindung mit einer Radaufhängung eines Fahrzeuges hat ein Federblatt 2, das eine Oberseite 3, eine Unterseite 4, zwei Endabschnitte 5 und einen sich zwischen den Endabschnitten 5 erstreckenden Mittelabschnitt 6 aufweist, wobei im Mittelabschnitt 6 ein Klemmbereich 7 vorgesehen ist, in dem die Blattfeder 1 im Einbauzustand im Fahrzeug über wenigstens eine Achsverbindungseinrichtung 10 der Radaufhängung, insbesondere über wenigstens einen die Blattfeder 1 teilweise umgreifenden Formteil, vorzugsweise über wenigstens einen U-Bolzen, mit einer Achse 9 oder einem Achsenbolzen des Fahrzeuges verbunden ist. Das Federblatt 2 weist eine der Anzahl an Achsverbindungseinrichtungen 10 entsprechende Anzahl an Achsverbindungsbauteilen 8 auf.

## Patentansprüche

1. Blattfeder (1), insbesondere Parabelfeder oder Lenkerfeder, zur Verwendung in Verbindung mit einer Radaufhängung eines Fahrzeuges, mit einem Federblatt (2), das eine Oberseite (3), eine Unterseite (4), zwei Endabschnitte (5) und einen sich zwischen den Endabschnitten (5) erstreckenden Mittelabschnitt (6) aufweist, wobei im Mittelabschnitt (6) ein Klemmbereich (7) vorgesehen ist, in welchem die Blattfeder (1) im Einbauzustand im Fahrzeug über wenigstens eine Achsverbindungseinrichtung (10) der Radaufhängung, insbesondere über wenigstens einen die Blattfeder (1) teilweise umgreifenden Formteil, vorzugsweise über wenigstens einen U-Bolzen, mit einer Achse (9) oder einem Achsenbolzen des Fahrzeuges verbunden ist, **dadurch gekennzeichnet, dass** das Federblatt (2) eine der Anzahl an Achsverbindungseinrichtungen (10) entsprechende Anzahl an Achsverbindungsbauteilen (8) aufweist.

2. Blattfeder nach Anspruch 1, **dadurch gekennzeichnet, dass** der Achsverbindungsbauteil (8) an der Oberseite (3) des Federblatts (2) angeordnet ist.

3. Blattfeder nach Anspruch 1 oder 2, **dadurch gekennzeichnet, dass** der Achsverbindungsbauteil (8) und das Federblatt (2) wenigstens bereichsweise formschlüssig ineinandergreifen.

4. Blattfeder nach Anspruch 3, **dadurch gekennzeichnet, dass** der Achsverbindungsbauteil (8) wenigstens einen der Oberseite (3) des Federblatts (2) zugeordneten Vorsprung (18) aufweist, dass das Federblatt (2) an seiner Oberseite (3) eine der Anzahl an Vorsprüngen (18) entsprechende Anzahl an Vertiefungen (19) aufweist, deren Form an die Form des entsprechenden Vorsprunges (18) angepasst ist, und dass der Achsverbindungsbauteil (8) in der entsprechenden Vertiefung (19) formschlüssig angeordnet ist.

5. Blattfeder nach einem der Ansprüche 1 bis 4, **dadurch gekennzeichnet, dass** das Federblatt (2) zwei oder mehr als zwei Achsverbindungsbauteile (8) aufweist.

6. Blattfeder nach Anspruch 5, **dadurch gekennzeichnet, dass** das Federblatt (2) im Klemmbereich (7) ein zentrales Durchgangsloch aufweist, und dass das zentrale Durchgangsloch zwischen Achsverbindungsbauteilen (8), insbesondere zwischen den beiden Achsverbindungsbauteilen (8), vorgesehen ist.

7. Blattfeder nach einem der Ansprüche 1 bis 6, **dadurch gekennzeichnet, dass** der Achsverbindungsbauteil (8) in der entsprechenden Vertiefung (19) und/oder an der Oberseite (3) des Federblatts (2) mit dem Federblatt (2) verklebt ist.

8. Blattfeder nach einem der Ansprüche 1 bis 7, **dadurch gekennzeichnet, dass** sie zwei oder mehr als zwei Federblätter (2) aufweist, wobei nur das im Einbauzustand im Fahrzeug oben angeordnete Federblatt (2) eine der Anzahl an Achsverbindungseinrichtungen (10) entsprechende Anzahl an Achsverbindungsbauteilen (8) aufweist.

9. Blattfeder nach einem der Ansprüche 1 bis 8, **dadurch gekennzeichnet, dass** das Federblatt (2) wenigstens einen Achsverbindungsbauteil (8), insbesondere zwei oder mehr, vorzugsweise zwei Achsverbindungsbauteile (8) aufweist, wobei jeder Achsverbindungsbauteil (8) einen Führungsabschnitt (13) für eine Achsverbindungseinrichtung (10) aufweist.

10. Blattfeder nach Anspruch 9, **dadurch gekennzeichnet, dass** der Führungsabschnitt (13) eine Kontur aufweist, die an die Kontur der entsprechenden Achsverbindungseinrichtung (10) angepasst ist.

11. Radaufhängung, zur Verwendung in Verbindung mit einem Fahrzeug, mit wenigstens einer Blattfeder (1), insbesondere Parabelfeder oder Lenkerfeder, und wenigstens einer Achsverbindungseinrichtung (10), insbesondere wenigstens einen die Blattfeder (1) teilweise umgreifenden Formteil, vorzugsweise wenigstens einen U-Bolzen, wobei die Blattfeder (1) wenigstens ein Federblatt (2) aufweist, das eine Oberseite (3), eine Unterseite (4), zwei Endabschnitte (5) und einen sich zwischen den Endabschnitten (5) erstreckenden Mittelabschnitt (6) aufweist und wobei im Mittelabschnitt (6) ein Klemmbereich (7) vorgesehen ist, in welchem die Blattfeder (1) über die Achsverbindungseinrichtung (10) mit einer Achse (9) oder einem Achsenbolzen des Fahrzeuges verbunden ist, **dadurch gekennzeichnet, dass** sie wenigstens eine Blattfeder (1) nach einem der Ansprüche 1 bis 10 aufweist.

12. Radaufhängung nach Anspruch 11, **dadurch gekennzeichnet, dass** der Achsverbindungsbauteil (8) zwischen der Oberseite (3) des Federblattes (2) und der Achsverbindungseinrichtung (10) angeordnet ist, wobei insbesondere der Achsverbindungsbauteil (8) an der Oberseite (3) des Federblattes (2) und/oder an der Achsverbindungseinrichtung (10) anliegt.

13. Radaufhängung nach Anspruch 11 oder 12, **dadurch gekennzeichnet, dass** zwei oder mehr als zwei Achsverbindungseinrichtungen (10) vorgesehen sind.

14. Fahrzeug mit wenigstens einer Achse (9) und/oder wenigstens einem Achsenbolzen und wenigstens einer Radaufhängung, **dadurch gekennzeichnet, dass** es eine Radaufhängung nach einem der Ansprüche 11 bis 13 aufweist.

15. Fahrzeug nach Anspruch 14, **dadurch gekennzeichnet, dass** pro Radaufhängung zwei oder mehr als zwei Achsverbindungseinrichtungen (10) vorgesehen sind, und dass ein entsprechender Abschnitt einer Achse (9) oder eines Achsenbolzens zwischen Achsverbindungseinrichtungen (10), insbesondere zwischen den beiden Achsverbindungseinrichtungen (10), angeordnet ist.
